# EUROPEAN PATENT APPLICATION

(11) **EP 4 418 692 A1**
(43) Date of publication of application: **21.08.2024**
(21) Application number: 21960191.1
(22) Date of filing: 12.10.2021
(51) Int. Cl.: H04W 4/02

(54) **EFFECTIVE INFORMATION INDICATION METHOD, AND APPARATUS, USER EQUIPMENT, NETWORK-SIDE DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Gunzelmann, Rainer
(86) International application number: PCT/CN2021/123345
(87) International publication number: WO 2023/060442

(57) **Abstract**

The present disclosure belongs to the technical field of communications. Provided are an effective information indication method, and an apparatus, a user equipment (UE), a network-side device and a storage medium. The method comprises: sending a location information request message to a UE, wherein the location information request message comprises effective information of positioning auxiliary information, and the effective information comprises at least one of: measurement priority information of a positioning reference signal (PRS) resource in the positioning auxiliary information, information of the PRS resource, and effective area information of the positioning auxiliary information. By means of the method provided in the present disclosure, the positioning accuracy of the UE can be determined.

## Description

### TECHNICAL FIELD

The present disclosure relates to a field of communication technologies, and particularly to a method and an apparatus for indicating valid information, a user equipment (UE), a network side device and a storage medium.

### BACKGROUND

In a communication system, in order to reduce a positioning delay, before a user equipment (UE) performs positioning, a network side device may pre-configure positioning assistance information for the UE, so that when the UE needs to be positioned, the UE may directly use the positioning assistance information pre-configured by the network side device, which improves the positioning efficiency. The pre-configured positioning assistance information includes measurement priority information of position reference signal (PRS) resources and reference PRS resource, the measurement priority information of the PRS resources is specifically related to a distance between a transmission-reception point (TRP) corresponding to each of the PRS resources and the UE. The closer the TRP is to the UE, the higher a priority of the PRS resource corresponding to the TRP. The UE may perform PRS measurement based on the measurement priority information of the PRS resources and the reference PRS resource to implement positioning.

However, in the related art, there may be a large time interval between a time point at which the network side device pre-configures the positioning assistance information for the UE and a time point at which the UE performs positioning using the pre-configured positioning assistance information. Within the time interval, the UE is very likely to move, so that the distance between the UE and each TRP changes, and the priority information of the PRS resources and the reference PRS resource in the pre-configured positioning assistance information are not applicable to the moved UE. In this case, if the UE is still located based on the pre-configured positioning assistance information, the positioning accuracy may be affected. Therefore, a method is urgently needed to solve the problem for the validity of the pre-configured positioning assistance information.

### SUMMARY

The present disclosure provides a method and an apparatus for indicating valid information, a user equipment (UE), a network side device and a storage medium, to solve the problem for the validity of the pre-configured positioning assistance information and to enhance the positioning accuracy.

According to an aspect of embodiments of the disclosure, a method for indicating valid information is provided, and is performed by a network side device. The method includes: sending a location information request message to a UE, in which the location information request message includes valid information of positioning assistance information, and the valid information includes at least one of: measurement priority information of position reference signal (PRS) resources and information of a reference PRS resource in the positioning assistance information, or valid area information of the positioning assistance information.

According to an aspect of embodiments of the disclosure, a method for indicating valid information is provided, and is performed by a UE. The method includes: receiving a location information request message from a network side device, in which the location information request message includes valid information of positioning assistance information, and the valid information includes at least one of: measurement priority information of PRS resources and information of a reference PRS resource in the positioning assistance information, or valid area information of the positioning assistance information; and performing PRS measurement based on the location information request message.

According to another aspect of embodiments of the disclosure, an apparatus based on reporting is provided. The apparatus includes: a sending module, configured to send a location information request message to a UE, in which the location information request message includes valid information of positioning assistance information, and the valid information includes at least one of: measurement priority information of PRS resources and information of a reference PRS resource in the positioning assistance information, or valid area information of the positioning assistance information.

According to another aspect of embodiments of the disclosure, an apparatus based on reporting is provided. The apparatus includes: a receiving module, configured to receive a location information request message from a network side device, in which the location information request message includes valid information of positioning assistance information, and the valid information includes at least one of: measurement priority information of PRS resources and information of a reference PRS resource in the positioning assistance information, or valid area information of the positioning assistance information; and a measurement module, configured to perform PRS measurement based on the location information request message.

According to another aspect of embodiments of the disclosure, a communication device is provided, which includes a processor and a memory storing a computer program. The computer program stored in the memory is executed by the processor, to cause the device to perform the method according to the above one aspect of embodiments.

According to another aspect of embodiments of the disclosure, a communication device is provided, which includes a processor and a memory storing a computer program. The computer program stored in the memory is executed by the processor, to cause the device to perform the method according to the above one aspect of embodiments.

According to another aspect of embodiments of the disclosure, a communication device is provided, which includes: a processor and an interface circuit.

The interface circuit is configured to receive code instructions and transmit the code instructions to the processor.

The processor is configured to run the code instructions to perform the method in the above one aspect of embodiments.

According to another aspect of embodiments of the disclosure, a communication device is provided, which includes: a processor and an interface circuit.

The interface circuit is configured to receive code instructions and transmit the code instructions to the processor.

The processor is configured to run the code instructions to perform the method in the above another aspect of embodiments.

According to another aspect of embodiments of the present disclosure, a computer-readable storage medium storing instructions is provided. When the instructions are executed, the method according to the above one aspect of embodiments is implemented.

According to another aspect of embodiments of the present disclosure, a computer-readable storage medium storing instructions is provided. When the instructions are executed, the method according to another aspect of embodiments is implemented.

In summary, in the method and the apparatus for indicating the valid information, the UE, the base station and the storage medium provided in embodiments of the disclosure, the network side device sends the location information request message to the UE, in which the location information request message includes valid information of the positioning assistance information, and the valid information includes at least one of: the measurement priority information of the PRS resources and the information of the reference PRS resource in the positioning assistance information, or the valid area information of the positioning assistance information. Therefore, when the UE triggers positioning based on the location information request message from the network side device, effective and accurate PRS measurement may be performed based on the valid information in the location information request message to achieve the positioning, which ensures the positioning accuracy.

### BRIEF DESCRIPTION OF THE DRAWINGS

The above and/or additional aspects and advantages of the present disclosure will become obvious and easy to understand from the following description of the embodiments in conjunction with the accompanying drawings.
FIG. 1 is a flowchart illustrating a method for indicating valid information according to an embodiment of the present disclosure.
FIG. 2 is a flowchart illustrating a method for indicating valid information according to another embodiment of the present disclosure.
FIG. 3 is a flowchart illustrating a method for indicating valid information according to another embodiment of the present disclosure.
FIG. 4 is a flowchart illustrating a method for indicating valid information according to another embodiment of the present disclosure.
FIG. 5 is a flowchart illustrating a method for indicating valid information according to another embodiment of the present disclosure.
FIG. 6 is a flowchart illustrating a method for indicating valid information according to another embodiment of the present disclosure.
FIG. 7 is a flowchart illustrating a method for indicating valid information according to another embodiment of the present disclosure.
FIG. 8 is a structural diagram illustrating an apparatus for indicating valid information according to an embodiment of the present disclosure.
FIG. 9 is a structural diagram illustrating an apparatus for indicating valid information according to another embodiment of the present disclosure.
FIG. 10 is a block diagram illustrating a user equipment according to an embodiment of the present disclosure.
FIG. 11 is a block diagram illustrating a network side device according to an embodiment of the present disclosure.

### DETAILED DESCRIPTION

The example embodiments will be described here, examples of which are shown in attached drawings. When the following descriptions refer to the accompanying drawings, same numbers in different drawings represent same or similar elements unless otherwise indicated. The implementations described in the following example embodiments do not represent all implementations consistent with embodiments of the present disclosure. Rather, they are merely examples of apparatuses and methods consistent with some aspects of the embodiments of the disclosure as detailed in the appended claims.

The terms described in the embodiments of the present disclosure are only for the purpose of describing specific embodiments and are not intended to limit the embodiments of the present disclosure. The singular forms "a/an", "the/said" used in the embodiments of the disclosure and the appended claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in embodiments of the present disclosure to describe various information, such information shall not be limited to these terms. These terms are only used to distinguish the same category of information. For example, without going beyond the scope of embodiments of the present disclosure, first information may also be referred to as second information, and similarly, second information may also be referred to as first information. It depends on the context. For example, the word "in case of " and "if" as used herein may be interpreted as "when" or "in response to determining".

A method and an apparatus for indicating valid information, a user equipment (UE), a network side device and a storage medium are described below in detail according to embodiments of the present device referring to accompanying drawings.

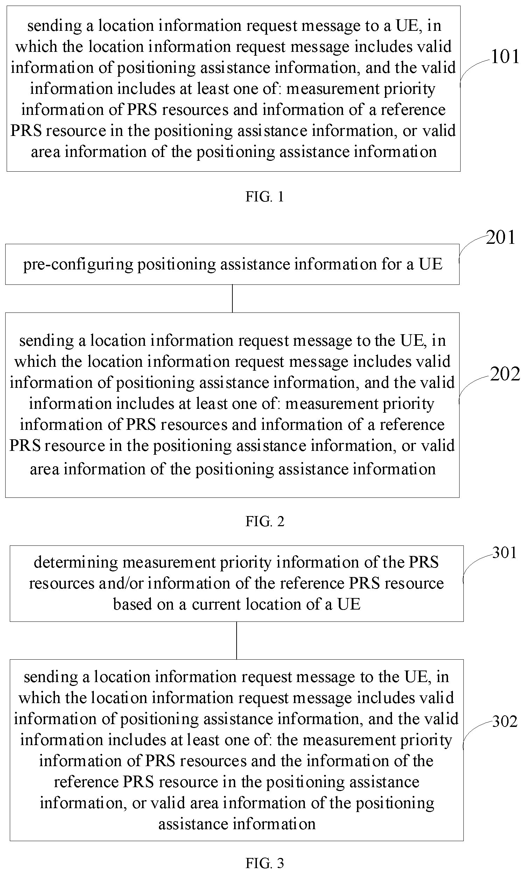

FIG. 1 is a flowchart illustrating a method for indicating valid information according to an embodiment of the present disclosure. The method is performed by a network side device. As illustrated in FIG. 1, the method may include following steps.

At step 101, a location information request message is sent to the UE, and the location information request message includes valid information of the positioning assistance information.

In an embodiment of the disclosure, the UE may refer to a device that provides voice and/or data connectivity for a user. The UE may communicate with one or more core networks via a radio access network (RAN). The UE may be an internet of things (IoT) terminal such as a sensor device and a mobile phone(or referred to as a cellular phone), or a computer having an IoT terminal such as a fixed, portable, compact, handheld, computer built-in or vehicle-mounted apparatus. For example, the UE is a station (STA), a subscriber unit, a subscriber station, a mobile station, a mobile, a remote station, an access point, a remote terminal, an access terminal, a user terminal or a user agent. Alternatively, the UE may be a device of an unmanned aerial vehicle (UAV). Alternatively, the UE may be a vehicle-mounted device, for example, may be a vehicle computer with a wireless communication function, or a wireless terminal externally connected to a vehicle computer. Alternatively, the UE may be a roadside device, for example, may be a street light, a traffic light or other roadside device with a wireless communication function.

In an embodiment of the present disclosure, the valid information includes at least one of: measurement priority information of position reference signal (PRS) resources and information of a reference PRS resource in the positioning assistance information, or valid area information of the positioning assistance information.

It needs to be noted that, in an embodiment of the disclosure, the network side device may configure a plurality of PRS resources for the UE, each of which corresponds to one TRP. The PRS resource indicates a manner in which a TRP transmits a PRS signal, so that the TRP may transmit a corresponding PRS signal based on the corresponding PRS resource.

In an embodiment of the disclosure, the measurement priority information of the PRS resources is specifically related to a distance between the TRP corresponding to each of the PRS resources and the UE. A PRS resource corresponding to a TRP that is closer to the UE has a higher priority, and a PRS resource corresponding to a TRP that is farther away from the UE has a lower priority.

In an embodiment of the present disclosure, the measurement priority information of the PRS resources may include at least one of: a PRS resource ID list, including: PRS resource IDs corresponding to PRS resources sorted in an ascending or descending order based on a measurement priority of the PRS resources; a physical cell ID (PCI) list corresponding to the PRS resources, including: PCIs corresponding to PRS resources sorted in an ascending or descending order based on a measurement priority of the PRS resources; or a cell global ID (CGI) list corresponding to the PRS resources, including: CGIs corresponding to PRS resources sorted in an ascending or descending order based on a measurement priority of the PRS resources.

That is, in an embodiment of the disclosure, the measurement priority information of the PRS resources may be indicated in the form of the above PRS resource ID list, and/or, the PCI list corresponding to the PRS resources, and the CGI list corresponding to the PRS resources. It needs to be noted that, in an embodiment of the disclosure, all PRS resources configured for the UE may be included in the PRS resource ID list, and/or, the PCI list corresponding to the PRS resources, and/or, the CGI list corresponding to the PRS resources. In another embodiment of the disclosure, only first N PRS resources with a high priority may be included in the PRS resource ID list, and/or, the PCI list corresponding to the PRS resources, and/or, the CGI list corresponding to the PRS resources.

In an embodiment of the disclosure, if the measurement priority information of the PRS resources includes a PRS resource ID list, the PRS resource ID list may include: PRS resource IDs corresponding to PRS resources sorted in an ascending order based on a measurement priority of the PRS resources. Table 1 shows a PRS resource ID list sorted in the ascending order according to embodiments of the disclosure.

**Table 1**

| |
|---|
| PRS resource ID of PRS resource#2 |
| PRS resource ID of PRS resource#1 |
| PRS resource ID of PRS resource#3 |

For example, in an embodiment of the disclosure, assuming that the network side device configures three PRS resources (i.e., PRS resource#1, PRS resource#2 and PRS resource#3, respectively) for the UE, where the PRS resource#1 corresponds to TRP#1, the PRS resource#2 corresponds to TRP#2 and the PRS resource#3 corresponds to TRP#3, and a distance between the TRP#2 and the UE is less than a distance between the TRP#1 and the UE, and a distance between the TRP#3 and the UE. It can be seen that a priority order of the PRS resource#1, the PRS resource#2 and the PRS resource#3 is: a priority of the PRS resource#2 is higher than a priority of the PRS resource#1 and a priority of the PRS resource#3. In this case, the measurement priority information for indicating the PRS resources may be indicated in the Table 1.

Further, in an embodiment of the disclosure, the reference PRS resource may be specifically any one of the plurality of PRS resources corresponding to the UE. In an embodiment of the present disclosure, the specific function of the reference PRS resource is that the UE determines a time difference of arrival (TDOA) of the PRS based on a time difference between a receiving time point of the reference PRS resource and a receiving time point of each of other PRS resources than the reference PRS resource.

For example, assuming that the network side device configures three PRS resources (i.e., PRS resource#1, PRS resource#2 and PRS resource#3, respectively) for the UE, and determines the PRS resource#3 as the reference PRS resource, the UE may be located based on a time difference between a receiving time point of the PRS resource#3 and a receiving time point of the PRS resource#2, and a time difference between a receiving time point of the PRS resource#3 and a receiving time point of the PRS resource#1.

In an embodiment of the present disclosure, the information of the reference PRS resource may specifically include at least one of: a PRS resource ID corresponding to the reference PRS resource; a PCI corresponding to the reference PRS resource; or a CGI corresponding to the reference PRS resource.

That is, in an embodiment of the disclosure, the reference PRS resource may be indicated by the PRS resource ID corresponding to the reference PRS resource; and/or the PCI corresponding to the reference PRS resource; and/or the CGI corresponding to the reference PRS resource.

Further, in an embodiment of the present disclosure, the valid area information of the positioning assistance information may specifically include at least one of: the valid area information of the positioning assistance information consisting of a PCI list; the valid area information of the positioning assistance information consisting of a CGI list; or the valid area information of the positioning assistance information consisting of a TRP ID list.

That is, in an embodiment of the disclosure, a PCI list of each cell included in the valid area information of the positioning assistance information, and/or, a CGI list of each cell included in the valid area information of the positioning assistance information, and/or, a TRP ID list of each TRP included in the valid area information of the positioning assistance information may be used to indicate a valid area where the UE may use the pre-configured positioning assistance information.

Based on the above, in an embodiment of the disclosure, assuming that the valid area information of the positioning assistance information includes PCI#1 and PCI#2, it indicates that when the UE is located in a cell corresponding to the PCI#1 and a cell corresponding to the PCI#2, the positioning assistance information may be valid, and the UE may be positioned based on the positioning assistance information.

In addition, it needs to be noted that, in an embodiment of the disclosure, the measurement priority information of the PRS resources and the information of the reference PRS resource in the positioning assistance information, or the valid area information of the positioning assistance information included in the position information request message are specifically the measurement priority information of the PRS resources and the information of the reference PRS resource in the positioning assistance information, or the valid area information of the positioning assistance information, which correspond to the UE at the time point when the network side device sends the position information request message to the UE.

Specifically, in an embodiment of the disclosure, the measurement priority information of the PRS resources in the above valid information is determined mainly based on a distance between each TRP and the UE at the time point when the network side device sends the location information request message to the UE.

In summary, in the method for indicating the valid information provided in embodiments of the disclosure, the network side device may send the location information request message to the UE, and the location information request message includes the valid information of the positioning assistance information, and the valid information includes at least one of: the measurement priority information of the PRS resources and the information of the reference PRS resource in the positioning assistance information, or the valid area information of the positioning assistance information. Therefore, when the UE triggers positioning based on the location information request message from the network side device, effective and accurate PRS measurement may be performed based on the valid information in the location information request message to achieve the positioning, which ensures positioning accuracy.

FIG. 2 is a flowchart illustrating a method for indicating valid information according to an embodiment of the present disclosure. The method is performed by a network side device. As illustrated in FIG. 2, the method may include following steps.

At step 201, positioning assistance information is pre-configured for the UE.

In an embodiment of the present disclosure, pre-configuring the positioning assistance information for the UE may specifically include least one of: pre-configuring the positioning assistance information for the UE in response to the network side device receiving a deferred location service request; pre-configuring, by the network side device, the positioning assistance information for the UE in a connected state, in which the pre-configured positioning assistance information is applied to the UE in the connected state and/or in a non-connected state; or pre-configuring the positioning assistance information for the UE in response to the network side device receiving scheduled location time information.

In an embodiment of the present disclosure, the positioning assistance information pre-configured by the network side device for the UE may include measurement priority information of PRS resources and information of a reference PRS resource.

It needs to be noted that, in an embodiment of the disclosure, the measurement priority information of the PRS resources in the pre-configured positioning assistance information is specifically determined based on a distance between each TRP and the UE at the time point when the network side device pre-configures the positioning assistance information for the UE.

In addition, in an embodiment of the disclosure, the network side device may be a location management function (LMF). The manner in which the network side device pre-configures the positioning assistance information for the UE may be: the LMF sends the positioning assistance information to a base station, and the base station transparently transmits the positioning assistance information from the LMF to the UE.

At step 202, a location information request message is sent to a UE. The location information request message includes valid information of positioning assistance information, and the valid information includes at least one of: measurement priority information of PRS resources and information of a reference PRS resource in the positioning assistance information, or valid area information of the positioning assistance information.

The descriptions of valid information may refer to the descriptions of the above embodiments, which will not be repeated here.

In an embodiment of the disclosure, the PRS resources involved in the location information request message shall be PRS resources included in pre-configured location assistance information.

It needs to be noted that, in an embodiment of the disclosure, the network side device sends the location information request message to the UE after the network side device pre-configures the positioning assistance information for the UE, that is, a first time point at which the network side device sends the location information request message is located behind a second time point at which the network side device pre-configures the positioning assistance information for the UE. It needs to be noted that, the UE may move within a time interval between the first time point and the second time point. If the UE moves, the distance between the UE and each TRP may change, so that the measurement priority information of each PRS resource at the first time point is different from the measurement priority information of each PRS resource at the second time point. Therefore, in an embodiment of the disclosure, the measurement priority information of the PRS resources in the location information request message is different from the measurement priority information of the PRS resources in the pre-configured positioning assistance information.

For example, in an embodiment of the disclosure, assuming that the network side device configures three PRS resources (i.e., PRS resource#1, PRS resource#2 and PRS resource#3, respectively) for the UE, where the PRS resource#1 corresponds to TRP#1, the PRS resource#2 corresponds to TRP#2 and the PRS resource#3 corresponds to TRP#3. When the UE pre-configures the positioning assistance information for the network side device, a distance between the TRP#1 and the UE is less than a distance between the TRP#2 and the UE, and a distance between the TRP#3 and the UE, then the measurement priority information of the PRS resources in the pre-configured positioning assistance information may be that: a priority of the PRS resource#1 is higher than a priority of the PRS resource#2 and a priority of the PRS resource#3.

In an embodiment of the disclosure, assuming that the UE moves after the network side device pre-configures the positioning assistance information for the UE, and when the network side device sends the location information request message to the UE, the distance between the TRP#2 and the UE is less than the distance between the TRP#1 and the UE and the distance between the TRP#3 and the UE, then the measurement priority information of the PRS resources in the location information request message sent by the network side device to the UE may be: the priority of the PRS resource#2 is higher than the priority of the PRS resource#1 and the priority of the PRS resource#3.

Based on the above contents, in an embodiment of the disclosure, the measurement priority information of the PRS resources in the location information request message may be valid information applicable to UE positioning at the first time point when the network side device sends the location information request message. Based on the above, in an embodiment of the disclosure, even if the UE moves within the time interval between the first time point and the second time point, effective and accurate PRS measurement may be performed to achieve the positioning when the UE triggers positioning based on the location information request message from the network side device, since the UE is located based on the valid information applicable to a current moment (that is, the first time point) included in the location information request message, rather than based on the pre-configured positioning assistance information. As such, the disclosure avoids the occurrence of a situation that "the pre-configured positioning assistance information is not applicable to positioning measurement of the moved UE since the UE moves, which affects the positioning accuracy", and ensures the positioning accuracy.

In addition, it needs to be noted that, if the network side device detects the UE does not move within the time interval between the first time point and the second time point, in an embodiment of the disclosure, the measurement priority information of the PRS resources and the information of the reference PRS resource in the location information request message sent by the network side device to the UE may be the same as the measurement priority information of the PRS resources and the information of the reference PRS resource in the location information request message pre-configured by the network side device for the UE. In another embodiment of the present disclosure, when the position information request message sent by the network side device to the UE may not include the measurement priority information of the PRS resources and the information of the reference PRS resource, the UE may be positioned directly based on the positioning assistance information pre-configured by the network side device at step 201.

In summary, in the method for indicating the valid information provided in embodiments of the disclosure, the network side device sends the location information request message to the UE, in which the location information request message includes the valid information of the positioning assistance information, and the valid information includes at least one of: the measurement priority information of the PRS resources and the information of the reference PRS resource in the positioning assistance information, or the valid area information of the positioning assistance information. Therefore, when the UE triggers positioning based on the location information request message from the network side device, effective and accurate PRS measurement may be performed based on the valid information in the location information request message to achieve the positioning, which ensures the positioning accuracy.

FIG. 3 is a flowchart illustrating a method for indicating valid information according to an embodiment of the present disclosure. The method is performed by a network side device. As illustrated in FIG. 3, the method may include following steps.

At step 301, measurement priority information of PRS resources and/or information of a reference PRS resource is determined based on a current location of a UE.

In an embodiment of the present disclosure, the method for determining the measurement priority information of the PRS resources and/or the information of the reference PRS resource based on the current location of the UE PRS resources includes at least one of the following methods.

In a first method, the measurement priority information of the PRS resources and/or the information of the reference PRS resource is determined, based on a cell where the UE is currently located.

In a second method, the measurement priority information of the PRS resources and/or the information of the reference PRS resource is determined, based on movement information of the UE and a time difference between a first time point at which the network side device sends the location information request message and a second time point at which the network side device pre-configures the positioning assistance information for the UE.

In an embodiment of the present disclosure, the method for determining the measurement priority information of the PRS resources in the first method may include: enabling that the PRS resources corresponding to a TRP that are closer to a cell where the UE is located have a higher priority.

In an embodiment of the present disclosure, the method for determining the measurement priority information of the PRS resources in the second method may include: firstly determining a first location where the UE is located when the network side device pre-configures the positioning assistance information for the UE, determining a movement trajectory of the UE based on a time difference between the first time point and the second time point and movement information of the UE (for example, a movement method, a movement speed), determining a second location where the UE is located when the network side device sends the location information request by taking the first location as a starting point according to the movement trajectory, and enabling the priority of the PRS resource corresponding to a TRP closer to the second position is higher.

At step 302, a location information request message is sent to a UE. The location information request message includes valid information of positioning assistance information, and the valid information includes at least one of: the measurement priority information of the PRS resources and the information of the reference PRS resource in the positioning assistance information, or valid area information of the positioning assistance information.

In an embodiment of the present disclosure, the descriptions of the valid information may refer to the descriptions of the above embodiments, which will not be repeated here.

In summary, in the method for indicating the valid information provided in embodiments of the disclosure, the network side device sends the location information request message to the UE, in which the location information request message includes the valid information of the positioning assistance information, and the valid information includes at least one of: the measurement priority information of the PRS resources and the information of the reference PRS resource in the positioning assistance information, or the valid area information of the positioning assistance information. Therefore, when the UE triggers positioning based on the location information request message from the network side device, effective and accurate PRS measurement may be performed based on the valid information in the location information request message to achieve the positioning, which ensures the positioning accuracy.

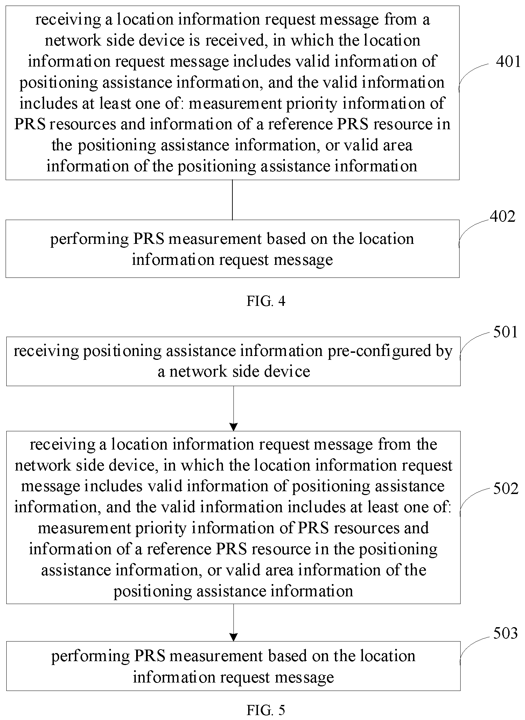

FIG. 4 is a flowchart illustrating a method for indicating valid information according to an embodiment of the present disclosure. The method is performed by a UE. As illustrated in FIG. 4, the method may include following steps.

At step 401, a location information request message from a network side device is received. The location information request message includes valid information of positioning assistance information, and the valid information includes at least one of: measurement priority information of PRS resources and information of a reference PRS resource in the positioning assistance information, or valid area information of the positioning assistance information.

It needs to be noted that, in an embodiment of the disclosure, the network side device may configure a plurality of PRS resources for the UE, each of which corresponds to one TRP. The PRS resources indicates a manner in which a TRP transmits a PRS signal, so that the TRP may transmit a corresponding PRS signal based on the corresponding PRS resource. In an embodiment of the disclosure, the measurement priority information of the PRS resources is specifically related to a distance between a TRP corresponding to each of the PRS resources and the UE. The PRS resource corresponding to a TRP that is closer to the UE has a higher priority, and the PRS resource corresponding to a TRP that is farther away from the UE has a lower priority.

In an embodiment of the present disclosure, the measurement priority information of the PRS resources may specifically include at least one of: a PRS resource ID list, including: PRS resource IDs corresponding to PRS resources sorted in an ascending or descending order based on a measurement priority of the PRS resources; a PCI list corresponding to the PRS resources, including: PCIs corresponding to PRS resources sorted in an ascending or descending order based on a measurement priority of the PRS resources; or a CGI list corresponding to the PRS resources, including: CGIs corresponding to PRS resources sorted in an ascending or descending order based on a measurement priority of the PRS resources.

That is, in an embodiment of the disclosure, the measurement priority information of the PRS resources may be indicated in the form of the above PRS resource ID list, and/or, the PCI list corresponding to the PRS resources, and the CGI list corresponding to the PRS resources. It needs to be noted that, in an embodiment of the disclosure, all PRS resources configured for the UE may be included in the PRS resource ID list, and/or, the PCI list corresponding to the PRS resources, and/or, the CGI list corresponding to the PRS resources. In another embodiment of the disclosure, only first N PRS resources with a higher priority may be included in the PRS resource ID list, and/or, the PCI list corresponding to the PRS resources, and/or, the CGI list corresponding to the PRS resources, where N is an integer, and N is less than a number of all PRS resources configured for the UE.

Further, in an embodiment of the disclosure, the reference PRS resource may be specifically any one of the plurality of PRS resources corresponding to a UE. In an embodiment of the present disclosure, the specific function of the reference PRS resource is that the UE is located based on a time difference between a receiving time point of the reference PRS resource and a receiving time point of each of other PRS resources than the reference PRS resource.

In an embodiment of the present disclosure, the information of the reference PRS resource may specifically include at least one of: a PRS resource ID corresponding to the reference PRS resource; a PCI corresponding to the reference PRS resource; or a CGI corresponding to the reference PRS resource.

That is, in an embodiment of the disclosure, the reference PRS resource may be indicated by the PRS resource ID corresponding to the reference PRS resource; and/or the PCI corresponding to the reference PRS resource; and/or the CGI corresponding to the reference PRS resource.

Further, in an embodiment of the present disclosure, the valid area information of the positioning assistance information may specifically include at least one of: the valid area information of the positioning assistance information consisting of a PCI list; the valid area information of the positioning assistance information consisting of a CGI list; or the valid area information of the positioning assistance information consisting of a TRP ID list.

That is, in an embodiment of the disclosure, a PCI list of each cell included in the valid area information of the positioning assistance information, and/or, a CGI list of each cell included in the valid area information of the positioning assistance information, and/or, a TRP ID list of each TRP included in the valid area information of the positioning assistance information may be used to indicate that the UE may use a valid area of the pre-configured positioning assistance information.

Based on the above, in an embodiment of the disclosure, assuming that the valid area information of the positioning assistance information includes PCI#1 and PCI#2, it indicates that when the UE is located in a cell corresponding to the PCI#1 and a cell corresponding to the PCI#2, the positioning assistance information may be valid, and the UE may be positioned based on the positioning assistance information.

In addition, it needs to be noted that, in an embodiment of the disclosure, the measurement priority information of the PRS resources and the information of the reference PRS resource in the positioning assistance information, or the valid area information of the positioning assistance information included in the location information request message are specifically the measurement priority information of the PRS resources and the information of the reference PRS resource in the positioning assistance information, or the valid area information of the positioning assistance information, which correspond to the UE at the time point when the network side device sends the location information request message to the UE.

Specifically, in an embodiment of the disclosure, the measurement priority information of the PRS resources in the above valid information is determined mainly based on a distance between each TRP and the UE at the time point when the network side device sends the location information request message to the UE.

At step 402, PRS measurement is performed based on the location information request message.

In an embodiment of the disclosure, the UE may preferentially measure a PRS resource with a high measurement priority based on the measurement priority information of the PRS resources when performing PRS measurement based on the location information request message.

In summary, in the method for indicating the valid information provided in embodiments of the disclosure, the network side device sends the location information request message to the UE, in which the location information request message includes the valid information of the positioning assistance information, and the valid information includes at least one of: the measurement priority information of the PRS resources and the information of the reference PRS resource in the positioning assistance information, or the valid area information of the positioning assistance information. Therefore, when the UE triggers positioning based on the location information request message from the network side device, effective and accurate PRS measurement may be performed based on the valid information in the location information request message to achieve the positioning, which ensures the positioning accuracy.

FIG. 5 is a flowchart illustrating a method for indicating valid information according to an embodiment of the present disclosure. The method is performed by a UE. As illustrated in FIG. 5, the method may include following steps.

At step 501, positioning assistance information pre-configured by a network side device is received.

At step 502, a location information request message from the network side device is received. The location information request message includes valid information of positioning assistance information, and the valid information includes at least one of: measurement priority information of PRS resources and information of a reference PRS resource in the positioning assistance information, or valid area information of the positioning assistance information.

At step 503, PRS measurement is performed based on the location information request message.

The descriptions at steps 501 to 503 may refer to the descriptions of the above embodiments, which will not be repeated here.

In summary, in the method for indicating the valid information provided in embodiments of the disclosure, the network side device sends the location information request message to the UE, in which the location information request message includes the valid information of the positioning assistance information, and the valid information includes at least one of: the measurement priority information of the PRS resources and the information of the reference PRS resource in the positioning assistance information, or the valid area information of the positioning assistance information. Therefore, when the UE triggers positioning based on the location information request message from the network side device, effective and accurate PRS measurement may be performed based on the valid information in the location information request message to achieve the positioning, which ensures the positioning accuracy.

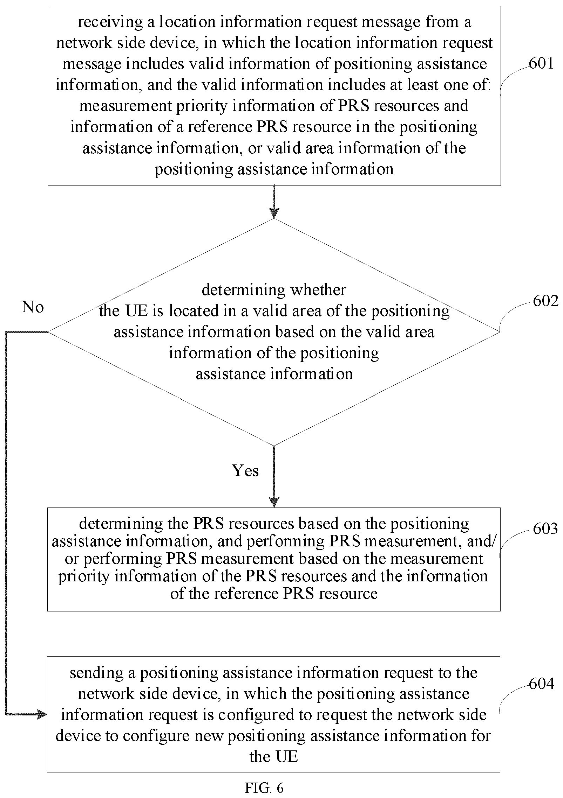

FIG. 6 is a flowchart illustrating a method for indicating valid information according to an embodiment of the present disclosure. The method is performed by a UE. As illustrated in FIG. 6, the method may include following steps.

At step 601, a location information request message from a network side device is received. The location information request message includes valid information of positioning assistance information, and the valid information includes at least one of: measurement priority information of PRS resources and information of a reference PRS resource in the positioning assistance information, or valid area information of the positioning assistance information.

At step 602, whether the UE is located in a valid area of the positioning assistance information is determined based on the valid area information of the positioning assistance information. When the UE is located in the valid area of the positioning assistance information, step 603 is executed; and when the UE is not located in the valid area of the positioning assistance information, step 604 is executed.

In an embodiment of the disclosure, the method for determining whether the UE is located in the valid area of the positioning assistance information may mainly include: determining whether a PCI of a cell where the UE is currently located is included in the valid area information when the valid area included in the valid area information of the positioning assistance information includes a PCI of each cell; when the PCI of the cell where the UE is currently located is included in the valid area information, it is deemed/determined that the UE is located in the valid area; and when the PCI of the cell where the UE is currently located is not included in the valid area information, it is determined that the UE is not located in the valid area.

In another embodiment of the disclosure, the method for determining whether the UE is located in the valid area of the positioning assistance information may mainly include: determining whether a CGI of a cell where the UE is currently located is included in the valid area information when the valid area included in the valid area information of the positioning assistance information includes a CGI of each cell; when the CGI of the cell where the UE is currently located is included in the valid area information, it is determined that the UE is located in the valid area; and when the CGI of the cell where the UE is currently located is not included in the valid area information, it is determined that the UE is not located in the valid area.

At step 603, the PRS resources are determined based on the positioning assistance information, and PRS measurement is performed, and/or PRS measurement is performed based on the measurement priority information of the PRS resources and the information of the reference PRS resource.

It needs to be noted that, in an embodiment of the disclosure, if the valid information in the location information request message received at step 601 only includes the valid area information, when it is determined that the UE is located in the valid area of the positioning assistance information, the PRS resources may be determined directly based on the positioning assistance information (that is, the location information request message pre-configured by the network side device for the LTE) and PRS measurement may be performed. Specifically, in an embodiment of the present disclosure, the UE may perform PRS measurement based on the measurement priority information of the PRS resources in the pre-configured positioning assistance information and the information of the reference PRS resource.

In an embodiment of the disclosure, if the valid information in the location information request message received at step 601 includes the measurement priority information, the information of the reference PRS resource or the valid area information, when it is determined that the UE is located in the valid area of the positioning assistance information, the UE may perform PRS measurement based on the measurement priority information of the PRS resources and the information of the reference PRS resource in the location information request message.

At step 604, a positioning assistance information request is sent to the network side device. The positioning assistance information request is configured to request the network side device to configure new positioning assistance information for the UE.

In an embodiment of the disclosure, when it is determined that the UE is not located in the valid area of the positioning assistance information, it indicates that the current positioning assistance information cannot be used for the UE to position. In this case, the UE may send a positioning assistance information request to the network side device, so that the network side device may configure new positioning assistance information for the UE based on the positioning assistance information request, and the UE may be positioned based on the new positioning assistance information.

In summary, in the method for indicating the valid information provided in embodiments of the disclosure, the network side device sends the location information request message to the UE, in which the location information request message includes the valid information of the positioning assistance information, and the valid information includes at least one of: the measurement priority information of the PRS resources and the information of the reference PRS resource in the positioning assistance information, or the valid area information of the positioning assistance information. Therefore, when the UE triggers positioning based on the location information request message from the network side device, effective and accurate PRS measurement may be performed based on the valid information in the location information request message to achieve the positioning, which ensures the positioning accuracy.

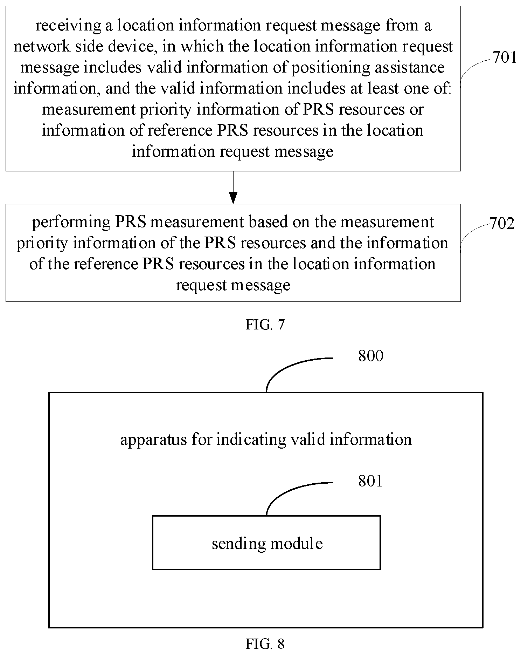

FIG. 7 is a flowchart illustrating a method for indicating valid information according to an embodiment of the present disclosure. The method is performed by a UE. As illustrated in FIG. 7, the method may include following steps.

At step 701, a location information request message from a network side device is received. The location information request message includes valid information of positioning assistance information, and the valid information includes at least one of: measurement priority information of PRS resources or information of a reference PRS resource in the location information request message.

At step 702, PRS measurement is performed based on the measurement priority information of the PRS resources and the information of the reference PRS resource in the location information request message. Performing PRS measurement is determining a priority of the measurement PRS and the reference PRS resource.

In an embodiment of the disclosure, when the valid information in the location information request message does not include the valid area information, the UE may perform PRS measurement directly based on the measurement priority information of the PRS resources and the information of the reference PRS resource included in the location information request message after receiving the location information request message.

The other descriptions of steps 701 to 702 may refer to the descriptions of the above embodiments, which will not be repeated here.

In summary, in the method for indicating the valid information provided in embodiments of the disclosure, the network side device sends the location information request message to the UE, in which the location information request message includes the valid information of the positioning assistance information, and the valid information includes at least one of: the measurement priority information of the PRS resources and the information of the reference PRS resource in the positioning assistance information, or the valid area information of the positioning assistance information. Therefore, when the UE triggers positioning based on the location information request message from the network side device, effective and accurate PRS measurement may be performed based on the valid information in the location information request message to achieve the positioning, which ensures the positioning accuracy.

FIG. 8 is a structural diagram illustrating an apparatus 800 for indicating valid information according to an embodiment of the present disclosure. The apparatus is applied to a network side device. As illustrated in FIG. 8, the apparatus 800 may include a sending module.

The sending module is configured to send a location information request message to a UE. The location information request message includes valid information of positioning assistance information, and the valid information includes at least one of: measurement priority information of PRS resources and information of a reference PRS resource in the positioning assistance information, or valid area information of the positioning assistance information.

In summary, in the apparatus for indicating the valid information provided in embodiments of the disclosure, the network side device sends the location information request message to the UE, in which the location information request message includes the valid information of the positioning assistance information, and the valid information includes at least one of: the measurement priority information of the PRS resources and the information of the reference PRS resource in the positioning assistance information, or the valid area information of the positioning assistance information. Therefore, when the UE triggers positioning based on the location information request message from the network side device, effective and accurate PRS measurement may be performed based on the valid information in the location information request message to achieve the positioning, which ensures the positioning accuracy.

Optionally, in an embodiment of the present disclosure, the measurement priority information of the PRS resources specifically includes at least one of: a PRS resource ID list, including: PRS resource IDs corresponding to PRS resources sorted in an ascending or descending order based on a measurement priority of the PRS resources; a PCI list corresponding to the PRS resources, including: PCIs corresponding to PRS resources sorted in an ascending or descending order based on a measurement priority of the PRS resources; or a CGI list corresponding to the PRS resources, including: CGIs corresponding to PRS resources sorted in an ascending or descending order based on a measurement priority of the PRS resources.

Optionally, in an embodiment of the present disclosure, the information of the reference PRS resource includes at least one of: a PRS resource ID corresponding to the reference PRS resource; a PCI corresponding to the reference PRS resource; or a CGI corresponding to the reference PRS resource.

Optionally, in an embodiment of the present disclosure, the valid area information of the positioning assistance information specifically includes at least one of: the valid area information of the positioning assistance information consisting of a PCI list; the valid area information of the positioning assistance information consisting of a CGI list; or the valid area information of the positioning assistance information consisting of a TRP ID list.

Optionally, in an embodiment of the present disclosure, the above apparatus is further configured to: pre-configure the positioning assistance information for the UE. The apparatus is further configured to: pre-configure the positioning assistance information for the UE in response to receiving a deferred location service request; pre-configure the positioning assistance information for the UE in a connected state, in which the pre-configured positioning assistance information is applied to the UE in the connected state and/or in a non-connected state; or pre-configure the positioning assistance information for the UE in response to receiving scheduled location time information.

Optionally, in an embodiment of the present disclosure, the above apparatus is further configured to: determine the measurement priority information of the PRS resources and/or the information of the reference PRS resource based on a current location of the UE.

Optionally, in an embodiment of the present disclosure, the above apparatus is further configured to: determine the measurement priority information of the PRS resources and/or the information of the reference PRS resource, based on a cell where the UE is currently located; and determine the measurement priority information of the PRS resources and/or the information of the reference PRS resource, based on movement information of the UE and a time difference between a first time point at which the network side device sends the location information request message and a second time point at which the network side device pre-configures the positioning assistance information for the UE.

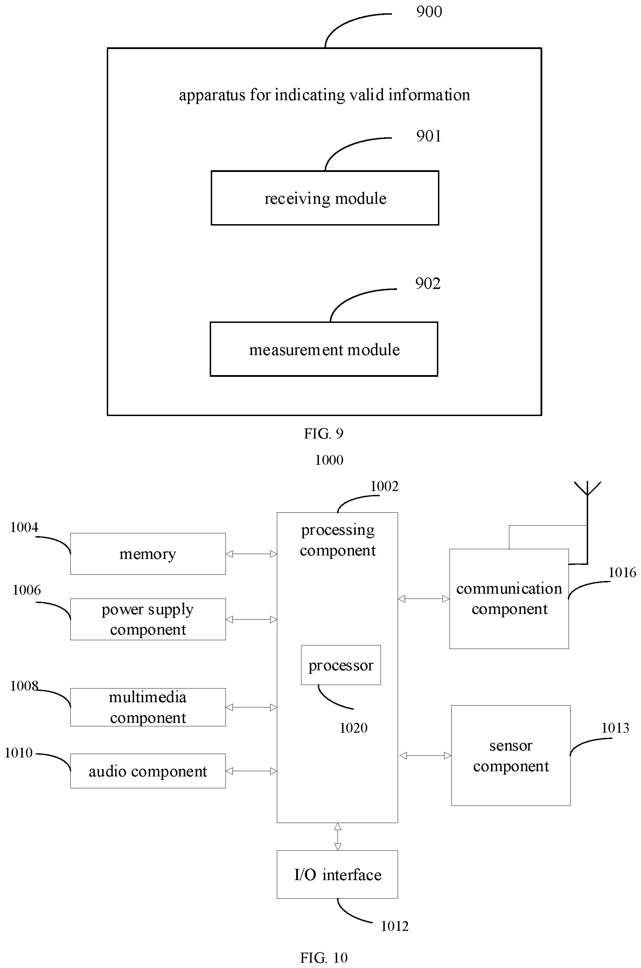

FIG. 9 is a structural diagram illustrating an apparatus 900 for indicating valid information according to an embodiment of the present disclosure. The apparatus 900 is applied to a UE. As illustrated in FIG. 9, the apparatus 900 may include a receiving module and a measurement module.

The receiving module is configured to receive a location information request message from a network side device. The location information request message includes valid information of positioning assistance information, and the valid information includes at least one of: measurement priority information of PRS resources and information of a reference PRS resource in the positioning assistance information, or valid area information of the positioning assistance information.

The measurement module is configured to perform PRS measurement based on the location information request message.

In summary, in the apparatus for indicating the valid information provided in embodiments of the disclosure, the network side device sends the location information request message to the UE, in which the location information request message includes the valid information of the positioning assistance information, and the valid information includes at least one of: the measurement priority information of the PRS resources and the information of the reference PRS resource in the positioning assistance information, or the valid area information of the positioning assistance information. Therefore, when the UE triggers positioning based on the location information request message from the network side device, effective and accurate PRS measurement may be performed based on the valid information in the location information request message to achieve the positioning, which ensures the positioning accuracy.

Optionally, in an embodiment of the present disclosure, the measurement priority information of the PRS resources specifically includes at least one of: a PRS resource ID list, including: PRS resource IDs corresponding to PRS resources sorted in an ascending or descending order based on a measurement priority of the PRS resources; a PCI list corresponding to the PRS resources, including: PCIs corresponding to PRS resources sorted in an ascending or descending order based on a measurement priority of the PRS resources; or a CGI list corresponding to the PRS resources, including: CGIs corresponding to PRS resources sorted in an ascending or descending order based on a measurement priority of the PRS resources.

Optionally, in an embodiment of the present disclosure, the information of the reference PRS resource includes at least one of: a PRS resource ID corresponding to the reference PRS resource; a PCI corresponding to the reference PRS resource; or a CGI corresponding to the reference PRS resource.

Optionally, in an embodiment of the present disclosure, the valid area information of the positioning assistance information specifically includes at least one of: the valid area information of the positioning assistance information consisting of a PCI list; the valid area information of the positioning assistance information consisting of a CGI list; or the valid area information of the positioning assistance information consisting of a TRP ID list.

Optionally, in an embodiment of the present disclosure, the above apparatus is further configured to: receive the positioning assistance information pre-configured by the network side device.

Optionally, in an embodiment of the present disclosure, the above measurement module is further configured to: perform PRS measurement based on the location information request message, by acts of: in response to determining that the UE is located in the valid area of the positioning assistance information, determining the PRS resources based on the positioning assistance information, and performing PRS measurement, and/or performing PRS measurement based on the measurement priority information of the PRS resources and the information of the reference PRS resource; and in response to determining that the UE is not located in the valid area of the positioning assistance information, sending a positioning assistance information request to the network side device, in which the positioning assistance information request is configured to request the network side device to configure new positioning assistance information for the UE.

Optionally, in an embodiment of the present disclosure, the above measurement module is further configured to: perform PRS measurement based on the location information request message, by performing PRS measurement based on the measurement priority information of the PRS resources and the information of the reference PRS resource included in the location information request message.

FIG. 10 is a block diagram illustrating a UE 1000 according to an embodiment of the present disclosure. For example, the UE 1000 may be a mobile phone, a computer, a digital broadcasting terminal equipment, a messaging device, a game console, a tablet device, a medical equipment, a fitness equipment, a personal digital assistant, etc.

As illustrated in FIG. 10, the UE 1000 may include at least one component: a processing component 1002, a memory 1004, a power supply component 1006, a multimedia component 1008, an audio component 1010, an input/output (I/O) of interface 1012, a sensor component 1013, and a communication component 1016.

The processing component 1002 generally controls the whole operation of the UE 1000, such as operations related to display, phone call, data communication, a camera operation and a recording operation. The processing component 1002 may include one or more processors 1020 to perform instructions, to complete all or part of steps of the above method. In addition, the processing component 1002 may include at least one module for the convenience of interactions between the processing component 1002 and other components. For example, the processing component 1002 may include a multimedia module for the convenience of interactions between the multimedia component 1008 and the processing component 1002.

The memory 1004 is configured to store all types of data to support an operation of the UE 1000. Examples of the data include the instructions of any application programs or methods operated on the UE 1000, contact data, phone book data, messages, pictures, videos, etc. The memory 1004 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 1006 may provide powers for each component of the UE 1000. The power supply component 1006 may include a power supply management system, at least one power supply, and other components related to generating, managing and distributing power for the UE 1000.

The multimedia component 1008 includes a screen of an output interface provided between the UE 1000 and the user. In some embodiments, a screen may include a liquid crystal display (LCD) and a touch panel (TP). When the screen includes a touch panel, the screen may be implemented as a touch screen to receive input signals from the user. The touch panel includes at least one touch sensor to sense touching and sliding gestures on the touch panel. The touch sensor may not only sense the boundary of touch or slide action, but also detect a wakeup time and a pressure related to the touching or sliding operation. In some embodiments, the multimedia component 1008 includes a front camera and/or a rear camera. When the UE 1000 is in an operation mode, such as a shooting mode or a video mode, the front camera and/or the rear camera may receive external multimedia data. Each of the front camera and rear camera may be a fixed optical lens system or an optical lens system with focal length and optical zoom capacity.

The audio component 1010 is configured as output and/or input signal. For example, the audio component 1010 includes a microphone (MIC). When the UE 1000 is in the operation mode, such as a call mode, a recording mode, and a speech recognition mode, the microphone is configured to receive external audio signals. The audio signals received may be further stored in the memory 1004 or sent via the communication component 1016. In some embodiments, the audio component 1010 further includes a speaker configured to output an audio signal.

The I/O interface 1012 provides an interface for the processing component 1002 and a peripheral interface module, and the peripheral interface module may be a keyboard, a click wheel, a button, etc. The buttons may include but not limited to a home button, a volume button, a start button and a lock button.

The sensor component 1013 includes at least one sensor configured to provide status assessments in all aspects for the UE 1000. For example, the sensor component 1013 may detect an on/off state of the UE 1000 and a relative positioning of the component. For example, the component is a display and a keypad of the UE 1000. The sensor component 1013 may further detect a location change of the UE 1000 or one component of the UE 1000, a presence or absence of a contact between the user and the UE 1000, an orientation or acceleration/deceleration of the UE 1000, and a temperature change of the UE 1000. The sensor component 1013 may include a proximity sensor, which is configured to detect the existence of objects nearby without any physical contacts. The sensor component 1013 may further include a light sensor such as a CMOS or CCD image sensor, which is used in imaging applications. In some embodiments, the sensor component 1013 may further include an acceleration transducer, a gyroscope sensor, a magnetic sensor, a pressure sensor or a temperature sensor.

The communication component 1016 may be configured for the convenience of wired or wireless communication between the UE 1000 and other devices. The UE 1000 may access wireless networks based on a communication standard, such as Wi-Fi^{™}, 2G or 3G, or their combination. In an exemplary embodiment, the communication component 1016 receives broadcast signals or broadcast-related information from an external broadcast management system via a broadcast channel. In an exemplary embodiment, the communication component 1016 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In an example embodiment, the UE 1000 may be implemented by at least one application specific integrated circuit (ASIC), digital signal processor(DSP), digital signal processing device(DSPD), programmable logic device(PLD), field programmable gate array (FPGA), controller, microcontroller, microprocessor or other electronics components, so as to perform the above method.

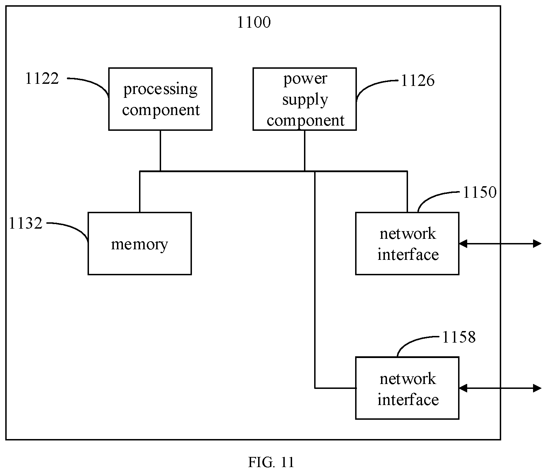

FIG. 11 is a block diagram illustrating a network side device 1100 according to embodiments of the present disclosure. For example, the network side device 1100 may be provided as a network side device. As illustrated in FIG. 11, the network side device 1100 includes a processing component 1111, which further includes at least one processor, and memory resources represented by a memory 1132 configured to store instructions executable by a processing component 1122, for example, application programs. The application stored programs in the memory 1132 may include one or more modules, each of which corresponds to a set of instructions. In addition, the processing component 1110 is configured to execute the instructions, to perform the any method applicable to the network side device as described in the above method, for example, the method as illustrated in FIG. 1.

The network side device 1100 may further include a power supply component 1126 configured to execute power management of the network side device 1100, and a wired or wireless network interface 1150 configured to connect the network side device 1100 to a network, and one I/O 1158. The network side device 1100 may execute an operating system stored in the memory 1132, for example, Windows Server ^{™}, Mac OS X^{™}, Unix^{™}, Linux^{™}, FreeBSD^{™} or similar.

The embodiments of the disclosure describe the methods proposed herein mainly from the perspective of the network side device and the UE. To achieve various functions in the methods according to the embodiments of the disclosure, the network side device and the UE may include a hardware structure and a software module, so that the above functions are implemented in the form of the hardware structure, the software module or a combination of the hardware structure and the software module. A certain function in the above functions may be implemented in the hardware structure, the software module or a combination of the hardware structure and the software module.

The embodiments of the disclosure describe the methods proposed herein mainly from the perspective of the network side device and the UE. To achieve various functions in the methods according to the embodiments of the disclosure, the network side device and the UE may include a hardware structure and a software module, so that the above functions are implemented in the form of the hardware structure, the software module or a combination of the hardware structure and the software module. A certain function in the above functions may be implemented in the hardware structure, the software module or a combination of the hardware structure and the software module.

A communication apparatus is provided according to embodiments of the present disclosure. The communication apparatus may include a transceiving module and a processing module. The transceiving module may include a transmitting module and/or a receiving module. The transmitting module is configured to implement a transmitting function, the receiving module is configure to implement a receiving function, and the transceiving module may implement a transmitting function and/or a receiving function.

The communication apparatus may be a terminal device (for example, a terminal device in the above method embodiments), or an apparatus in the terminal device, or an apparatus capable of being used with the terminal device. Alternatively, the communication apparatus may be a network device, or an apparatus in the network device, or an apparatus capable of being used with the network device.

Another communication device is provided according to the embodiments of the present disclosure. The communication device may be a network device, a terminal device (a terminal device in the above method embodiments), or a chip, a system on chip or a processor that supports the network device to implement the method, or a chip, a system on chip or a processor that supports the terminal device to implement the method. The device may be configured to implement the methods described in the method embodiments, and the details may refer to the descriptions in the method embodiments.

The communication device may include one or more processors. The processor may include a general purpose processor or a dedicated purpose processor. For example, the processor may be a baseband processor or a central processor. The baseband processor may be configured to process a communication protocol and communication data, and the central processor may be configured to control a communication device (e.g., a network side device, a baseband chip, a terminal device, a terminal device chip, a DU or CU, etc.), to execute a computer program, and process data of the computer program.

Optionally, the communication device may further include one or more memories having a computer program stored. The processor executes the computer program so that the communication device performs the method as described in the above method embodiments. Optionally, the memory may further store data. The communication device and the memory may be independently configured or integrated together.

Optionally, the communication device may further include a transceiver and an antenna. The transceiver may be referred to as a transceiving unit, a transceiver machine or a transceiving circuit, which may be configured to achieve a transceiving function. The transceiver may include a receiver and a transmitter. The receiver may be referred to as a receiver machine or a receiving circuit, etc., for implementing a receiving function; the transmitter may be referred to as a transmitter machine or a transmission circuit, etc. for implementing a transmitting function.

Optionally, the communication device may further include one or more interface circuits. The interface circuit is configured to receive code instructions and transmit the code instructions to the processor. The processor runs the code instructions so that the communication device performs the method according to the above method embodiment.

When the communication device is a terminal device (a terminal device in the above method embodiments), the processor is configured to execute the method as illustrated in any one of FIGS. 1 to 4.

When the communication device is a network device, the transceiver is configured to execute the method as illustrated in any one of FIGS. 5 to 7.

In an implementation, the processor may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor may store a computer program. The computer program is running on the processor, to cause the communication device to perform the method as described in the above method embodiments. The computer program may be solidified in the processor. In this case, the processor may be implemented in hardware.

In an implementation, the communication device may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as a complementary metal oxide semiconductor (CMOS), a nMetal-oxide-semiconductor (NMOS), a positive channel metal oxide semiconductor (PMOS), a bipolar junction transistor (BJT), a bipolar CMOS (BiCMOS), silicon germanium (SiGe) and gallium arsenide (GaAs).

The communication device described in the above embodiments may be a network device or a terminal device (for example, a terminal device in the above method embodiments), but the scope of the communication device described in the present disclosure is not limited, and a structure of the communication device may not be limited. The communication device may be a stand-alone device or may be a part of a larger device. For example, the communication device may be:
(1) a stand-alone IC, or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver machine, a terminal device, a smart terminal device, a cellular phone, a wireless device, a handset, a mobile unit, a vehicle device, a network device, a cloud device, an artificial intelligence device, etc.; and
(6) others, and so forth.

In the case that the communication device may be a chip or a system on chip, the chip includes a processor and a chip. There may be one or more processors, and there may be a plurality of interfaces.

Optionally, the chip further includes a memory. The memory is configured to save a necessary computer program and data.

Those skilled in the related art may understand that, various illustrative logical blocks and steps listed in embodiments of the present disclosure, may be implemented in an electronic hardware, a computer software or a combination of the electronic hardware and the computer software. Whether the function is implemented in hardware or software depends on specific applications and design requirements for an overall system. Those skilled in the art may implement the functions by using various methods for each specific application, but such an implementation should not be understood as going beyond the protection scope of embodiments of the present disclosure.

A system for determining a sidelink duration is further provided according to embodiments of the disclosure. The system includes a communication device serving as a terminal device (e.g., first terminal device described in the afore-mentioned method embodiments) and a communication device serving as a network device in the afore-mentioned embodiments, or the system includes a communication device serving as a terminal device (e.g., first terminal device in the afore-mentioned method embodiments) and a communication device serving as a network device in the afore-mentioned embodiments.

A readable storage medium with instructions stored thereon is further provided in the disclosure. When the instructions are executed by a computer, steps in the any one method embodiment are implemented.

A computer program product is further provided. The computer program product implements functions of the above any one method embodiment when executed by a processor.

In the above embodiments, it may be implemented in whole or in part by software, hardware, firmware, or any combination. When implemented in software, it may be implemented in whole or in part in the form of a computer program product. The computer program product includes one or more computer programs. When the computer program is loaded and executed on a computer, the processes or functions described in the embodiments of the disclosure are generated in whole or in part. The computer may be a general-purpose computer, a special-purpose computer, a computer network, or other programmable device. The computer program may be stored in or transferred from one to another computer-readable storage medium, for example, the computer program may be transferred from a website, a computer, a server, or a data center to another website, another computer, another server or another data center through wired means (such as a coaxial cable, an optical fiber, a digital subscriber line (DSL)) or wireless means (such as infrared, wireless, microwave, etc.). The computer-readable storage medium may be any available medium that may be accessed by a computer, or a data storage device such as a server, a data center, etc. that contains one or more available media integrated. The available media may be magnetic media (e.g., a floppy disk, a hard disk, a tape), optical media (e.g., a high-density digital video disc, DVD), or semiconductor media (e.g., a solid state disk, SSD) etc.

Those skilled in the art may understand that various numbers such as first and second involved in the disclosure are distinguished merely for convenience of description, and are not intended to limit the scope of embodiments of the disclosure, but also to indicate an order of precedence.

The term "at least one" in the present disclosure may also be described as one or more (which may be two, three, four or more), which is not limited in the present disclosure. In embodiments of the present disclosure, for a kind of technical feature, technical features in the kind of technical feature are distinguished by "first", "second", "third", "A", "B", "C" and "D", etc. The technical features described in "first", "second", "third", "A", "B", "C" and "D" are in no particular order or size sequence.

After considering the specification and practicing the disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of embodiments in the present disclosure are given by the appended claims.

It should be understood that the present disclosure is not limited to the precise structure described above and shown in the drawings, and various modifications and changes may be made without departing from the scope of the disclosure. The scope of the present disclosure is only limited by the appended claims.

## Claims

1. A method for indicating valid information, performed by a network side device, comprising:
sending a location information request message to a user equipment (UE), wherein the location information request message comprises valid information of positioning assistance information, and the valid information comprises at least one of: measurement priority information of position reference signal (PRS) resources and information of a reference PRS resource in the positioning assistance information, or valid area information of the positioning assistance information.

2. The method according to claim 1, wherein the measurement priority information of the PRS resources comprises at least one of:
a PRS resource ID list, comprising PRS resource IDs corresponding to PRS resources sorted in an ascending or descending order based on a measurement priority of the PRS resources;
a physical cell ID (PCI) list corresponding to the PRS resources, comprising: PCIs corresponding to PRS resources sorted in an ascending or descending order based on a measurement priority of the PRS resources; or
a cell global ID (CGI) list corresponding to the PRS resources, comprising: CGIs corresponding to PRS resources sorted in an ascending or descending order based on a measurement priority of the PRS resources.

3. The method according to claim 1, wherein the information of the reference PRS resource comprises at least one of:
a PRS resource ID corresponding to the reference PRS resource;
a physical cell ID (PCI) corresponding to the reference PRS resource; or
a cell global ID (CGI) corresponding to the reference PRS resource.

4. The method according to claim 1, wherein the valid area information of the positioning assistance information comprises at least one of:
the valid area information of the positioning assistance information consisting of a physical cell ID (PCI) list;
the valid area information of the positioning assistance information consisting of a cell global ID (CGI) list; or
the valid area information of the positioning assistance information consisting of a transmission-reception point (TRP) ID list.

5. The method according to claim 1, further comprising: pre-configuring the positioning assistance information for the UE;
wherein pre-configuring the positioning assistance information for the UE comprises at least one of:
pre-configuring the positioning assistance information for the UE in response to receiving a deferred location service request;
pre-configuring the positioning assistance information for the UE in a connected state, wherein the pre-configured positioning assistance information is applied to the UE in the connected state and/or in a non-connected state; or
pre-configuring the positioning assistance information for the UE in response to receiving scheduled location time information.

6. The method according to claim 1 or 5, further comprising:
determining the measurement priority information of the PRS resources and/or information of the reference PRS resource based on a current location of the UE.

7. The method according to claim 6, wherein determining the measurement priority information of the PRS resources and/or the information of the reference PRS resource based on the current location of the UE comprises at least one of:
determining the measurement priority information of the PRS resources and/or the information of the reference PRS resource, based on a cell where the UE is currently located; or
determining the measurement priority information of the PRS resources and/or the information of the reference PRS resource, based on movement information of the UE and a time difference between a first time point at which the network side device sends the location information request message and a second time point at which the network side device pre-configures the positioning assistance information for the UE.

8. A method for indicating valid information, performed by a user equipment (UE), comprising:
receiving a location information request message from a network side device, wherein the location information request message comprises valid information of positioning assistance information, and the valid information comprises at least one of: measurement priority information of position reference signal (PRS) resources and information of a reference PRS resource in the positioning assistance information, or valid area information of the positioning assistance information; and
performing PRS measurement based on the location information request message.

9. The method according to claim 8, wherein the measurement priority information of the PRS resources comprises at least one of:
a PRS resource ID (ID) list, comprising: PRS resource IDs corresponding to PRS resources sorted in an ascending or descending order based on a measurement priority of the PRS resources;
a physical cell ID (PCI) list corresponding to the PRS resources, comprising: PCIs corresponding to PRS resources sorted in an ascending or descending order based on a measurement priority of the PRS resources; or
a cell global ID (CGI) list corresponding to the PRS resources, comprising: CGIs corresponding to PRS resources sorted in an ascending or descending order based on a measurement priority of the PRS resources.

10. The method according to claim 8, wherein the information of the reference PRS resource comprises at least one of:
a PRS resource ID corresponding to the reference PRS resource;
a physical cell ID (PCI) corresponding to the reference PRS resource; or
a cell global ID (CGI) corresponding to the reference PRS resource.

11. The method according to claim 8, wherein the valid area information of the positioning assistance information comprises at least one of:
the valid area information of the positioning assistance information consisting of a physical cell ID (PCI) list;
the valid area information of the positioning assistance information consisting of a cell global ID (CGI) list; or
the valid area information of the positioning assistance information consisting of a transmission-reception point (TRP) ID list.

12. The method according to claim 8, further comprising:
receiving the positioning assistance information pre-configured by the network side device.

13. The method according to claim 8, wherein performing PRS measurement based on the location information request message comprises:
determining whether the UE is located in a valid area of the positioning assistance information based on the valid area information of the positioning assistance information;
in response to determining that the UE is located in the valid area of the positioning assistance information, determining the PRS resources based on the positioning assistance information, and performing PRS measurement, and/or performing PRS measurement based on the measurement priority information of the PRS resources and the information of the reference PRS resource; and
in response to determining that the UE is not located in the valid area of the positioning assistance information, sending a positioning assistance information request to the network side device, wherein the positioning assistance information request is configured to request the network side device to configure new positioning assistance information for the UE.

14. The method according to claim 8, wherein performing PRS measurement based on the location information request message comprises: performing PRS measurement based on the measurement priority information of the PRS resources and the information of the reference PRS resource in the positioning assistance information.

15. An apparatus for indicating valid information, comprising:
a sending module, configured to send a location information request message to a user equipment (UE), wherein the location information request message comprises valid information of positioning assistance information, and the valid information comprises at least one of: measurement priority information of position reference signal (PRS) resources and information of a reference PRS resource in the positioning assistance information, or valid area information of the positioning assistance information.

16. An apparatus for indicating valid information, comprising:
a receiving module, configured to receive a location information request message from a network side device, wherein the location information request message comprises valid information of positioning assistance information, and the valid information comprises at least one of: measurement priority information of position reference signal (PRS) resources and information of a reference PRS resource in the positioning assistance information, or valid area information of the positioning assistance information; and
a measurement module, configured to perform PRS measurement based on the location information request message.

17. A communication device, comprising a processor and a memory storing a computer program, wherein when the computer program is executed by the processor, the communication device is caused to perform the method according to any one of claims 1 to 7.

18. A communication device, comprising a processor and a memory storing a computer program, wherein when the computer program is executed by the processor, the communication device is caused to perform the method according to any one of claims 8 to 14.

19. A communication device, comprising a processor and an interface circuit;
wherein the interface circuit is configured to receive code instructions and transmit the code instructions to the processor; and
the processor is configured to run the code instructions to perform the method according to any one of claims 1 to 7.

20. A communication device, comprising a processor and an interface circuit;
wherein the interface circuit is configured to receive code instructions and transmit the code instructions to the processor; and
the processor is configured to run the code instructions to perform the method according to any one of claims 8 to 14.

21. A computer-readable storage medium storing instructions, wherein when the instructions are executed, the method according to any one of claims 1 to 7 is caused to be implemented.

22. A computer-readable storage medium storing instructions, wherein when the instructions are executed, the method according to any one of claims 8 to 14 is caused to be implemented.
